# EUROPÄISCHE PATENTANMELDUNG

(11) **EP 2 549 290 A1**
(43) Veröffentlichungstag der Anmeldung: **23.01.2013**
(21) Anmeldenummer: 11174343.1
(22) Anmeldetag: 18.07.2011
(51) Int. Cl.: G01S 7/481, G01S 17/89

(54) **Optoelektronischer Sensor und Verfahren zur Erfassung und Abstandsbestimmung von Objekten**

(71) Anmelder: SICK AG, 79183 Waldkirch (DE)
(72) Erfinder: Anselment, Christoph, 79183 Waldkirch (DE); Pastor, Sebastian, 79194 Gundelfingen (DE)
(74) Vertreter: Hehl, Ulrich

(57) **Zusammenfassung**

Es wird ein optoelektronischer Sensor angegeben, insbesondere ein Laserscanner, der einen Lichtsender (12) zum Aussenden eines Lichtstrahls, eine um eine Drehachse (28) drehbare Ablenkeinheit (16) zur periodischen Ablenkung des Lichtstrahls, eine Verschwenkeinrichtung zum Verschwenken der Ablenkeinheit (16) um eine Schwenkachse (34) quer zu der Drehachse (28), einen Lichtempfänger (24) zum Erzeugen eines Empfangssignals aus dem in dem Überwachungsbereich remittierten oder reflektierten Lichtstrahl sowie eine Auswertungseinheit (26) aufweist, welche für die Erfassung von Objekten in dem Überwachungsbereich anhand des Empfangssignals ausgebildet ist. Dabei weist die Verschwenkeinrichtung ein Hubachselement (36) auf, das mit der Ablenkeinheit (16) verbunden ist und dessen Translationsbewegung längs der Drehachse (28) die Schwenkbewegung der Ablenkeinheit (16) bewirkt.

## Beschreibung

Die Erfindung betrifft einen optoelektronischen Sensor und ein Verfahren zur Erfassung und Abstandsbestimmung von Objekten nach dem Oberbegriff von Anspruch 1 beziehungsweise 15.

Scanner werden für vielfältige Überwachungs- und Vermessungsaufgaben verwendet. Dazu tastet ein Abtast- oder Scanstrahl einen Bereich ab und wertet das remittierte oder reflektierte Licht aus. Um auch Informationen über Objektabstände, Konturen oder Profile zu gewinnen, wird meist nicht nur die Anwesenheit von Objekten, sondern zugleich auch deren Entfernung bestimmt. Derartige entfernungsmessende Laserscanner arbeiten nach einem Lichtlaufzeitprinzip, bei dem die Laufzeit vom Scanner in die Szenerie und zurück gemessen wird und anhand der Lichtgeschwindigkeit Entfernungsdaten berechnet werden.

Es sind zwei Verfahren bekannt, um den Lichtweg zu bestimmen. Pulsbasierte Verfahren prägen dem Scanstrahl ein signifikantes Muster auf, beispielsweise einen schmalen Puls von nur wenigen Nanosekunden Dauer, und bestimmen den Empfangszeitpunkt dieses Musters. Bei phasenbasierten Verfahren moduliert der Lichtsender den Scanstrahl, und es wird die Phase zwischen einer Referenz und dem empfangenen Scanstrahl ermittelt.

Bekannte Laserscanner weisen einen Drehspiegel oder ein Polygonrad auf, um periodisch eine Überwachungsebene oder ein Segment einer Überwachungsebene abzutasten. Viele Anwendungen erfordern aber die Abtastung eines dreidimensionalen Raumbereichs und nicht lediglich einer Fläche. Ein herkömmlicher Ausweg besteht darin, für eine Relativbewegung zwischen Laserscanner und Objekt zu sorgen, wie beispielsweise in der DE 197 41 730 B4. Dies erfordert erheblichen Aufwand, und zahlreiche Anwendungen eignen sich gar nicht für eine solche kontrollierte Relativbewegung.

In der DE 10 2008 032 216 A1 wird die gesamte Scaneinheit samt Sender, Empfänger und Drehspiegel auf einem Ablenkteller angeordnet. Durch Verschwenken des Ablenktellers wird dann die Scanebene variiert, um so insgesamt einen dreidimensionalen Raumbereich zu überwachen. Dies erfordert erheblichen Zusatzaufwand für den Ablenkteller, und die Verschwenkbewegung muss die Scaneinheit als Ganzes und damit relativ große Massen bewegen. Zudem ist eine kabellose Datenübertragung auf die mitbewegten Lichtsender und Lichtempfänger erforderlich.

Als weiterer Lösungsansatz ist bekannt, eine zusätzliche Ablenkeinheit zu verwenden, die für eine Ablenkung des Scanstrahls in einer zweiten Richtung sorgt. Beispielsweise wird in der DE 20 2009 012 114 U1 der 360°-Abtastbereich eines Drehspiegels aufgeteilt. In einem vorderen Winkelbereich wird in herkömmlicher Weise eine Fläche abgetastet. In einem hinteren Winkelbereich wird der Abtaststrahl mehrfach umgelenkt und fällt dann auf einen Schwingspiegel, der in einer Richtung quer zu der Ablenkrichtung des Drehspiegels verschwenkt wird. Somit wird über den hinteren Winkelbereich ein Raumausschnitt anstelle einer Fläche abgetastet. Ein zusätzlicher Schwingspiegel hat aber baubedingt nur einen kleinen Öffnungswinkel. Außerdem entstehen durch die Verwendung zweier Spiegel erhöhte Kosten und ein größerer Bauraumbedarf, somit ein hoher optischer und mechanischer Aufwand, zusätzliche Sende- und Empfangssignalverluste und Schwierigkeiten bei der Sende- und Empfangskanaltrennung.

Die DE 197 27 792 C2 verwendet keinen zusätzlichen Schwingspiegel, sondern setzt einen Drehspiegel ein, der zusätzlich um eine Schwenkachse senkrecht zur Drehachse verschwenkbar ist. Über zwei senkrecht zueinander stehende, ineinandergreifende Zahnräder wirkt ein einziger Antriebsmotor sowohl auf die Dreh- als auch auf die Schwenkachse. Mit Hilfe eines Getriebes und eines zusätzlichen Stellmotors kann der Phasenwinkel zwischen der Drehbewegung und der Schwenkbewegung verändert werden, um so ein zusätzliches Verschwenken des Drehspiegels zu erreichen und einen dreidimensionalen Raumbereich abzutasten. Dies ist deshalb nachteilig, weil das Getriebe und die Zahnräder baubedingt nicht verschleißfrei sein können. Außerdem müssen an diesen Bauteilen, die in unmittelbarer Nähe optisch empfindlicher Elemente wie der Ablenkeinheit angeordnet sind, Schmiermittel oder Fette eingesetzt werden. Das kann zu Verschmutzungen in den optischen Pfaden führen und somit Wartungsbedarf oder sogar einen Geräteausfall nach sich ziehen.

Es ist daher Aufgabe der Erfindung, für einen gattungsgemäßen Sensor eine verbesserte Möglichkeit der dreidimensionalen Abtastung zu finden.

Diese Aufgabe wird durch einen optoelektronischen Sensor und ein Verfahren zur Erfassung und Abstandsbestimmung von Objekten gemäß Anspruch 1 beziehungsweise 15 gelöst. Dabei geht die Erfindung von dem Grundgedanken aus, die üblicherweise vorhandene Ablenkeinheit zur Abtastung einer Überwachungsebene zusätzlich um einen variablen Schwenkwinkel zu verkippen, um einen dreidimensionalen Raumbereich zu erfassen. Anstelle verschleißanfälliger Bauteile wie Zahnräder und Getriebe, welche eine Rotationsbewegung verwenden, um den Schwenkwinkel zu verstellen, wird dafür erfindungsgemäß eine Translationsbewegung längs der Drehachse ausgenutzt. Dazu wird ein Hubachselement getriebefrei mit der Ablenkeinheit verbunden und in eine Auf- und Abbewegung versetzt.

Die Erfindung hat den Vorteil, dass ein einfacher optisch-mechanischer Aufbau zur dreidimensionalen Abtastung mit nur einem einzigen Spiegel möglich ist. Geringerer Aufwand und Bauraumbedarf führen zu einer kostengünstigen und kompakten Lösung bei großen 3D-Öffnungswinkeln von bis zu 360°. Die Antriebseinheiten für die Dreh- und Schwenkbewegungen können ortsfest sein, so dass keine kabellose Energieversorgung benötigt wird. Die Trennung von Sende- und Empfangskanal ist auf einfache Weise möglich. Die zu bewegende Masse bleibt gering. Trotz des zusätzlichen Bewegungsfreiheitsgrades der Ablenkeinheit bleibt das System verschleißarm.

Das Hubachselement ist bevorzugt parallel zu der Drehachse angeordnet, insbesondere auf der Drehachse, und vollzieht die Drehbewegung der Ablenkeinheit nicht mit. Das Hubachselement bildet demnach eine feststehende Achse, welche nur die Translationsbewegung auf der Drehachse ausführt. Dazu ist es vorzugsweise langgestreckt beziehungsweise als Stange ausgebildet. Andere Geometrien sind aber ebenso denkbar, solange die Übertragung der Schwenkbewegung auf die Ablenkeinheit aufgrund einer Translationsbewegung erfolgt.

Das Hubachselement weist bevorzugt an einem in Richtung zu der Ablenkeinheit befindlichen Ende ein Drehscheibenelement auf, welches mit der Ablenkeinheit mitrotiert und insbesondere über ein Kugellager mit dem Hubachselement verbunden ist. Durch das Drehscheibenelement kann die Schwenkbewegung trotz der Rotation der Ablenkeinheit mit einer Translationsbewegung übertragen werden.

Das Drehscheibenelement ist bevorzugt gegenüber der Senkrechten zur Drehachse um einen Winkel verkippt. Wenn das Drehscheibenelement alternativ senkrecht zu der Drehachse steht, wird bei einer gegebenen Lage des Hubachselements mit einem 360°-Umlauf der Ablenkeinheit eine Ebene abgescannt. Bei verkipptem Drehscheibenelement dagegen wird diese Ebene quasi sinusförmig verbogen, oder bildet bei Projektion auf eine Fläche parallel zur Drehachse eine Art Sichel. Dieser Effekt kann ausgenutzt werden, um Neigungen des Sensors zu kompensieren, oder um beispielsweise in einer mobilen Anwendung in den seitlichen Bereichen durch die Sicheln einen größeren Sichtbereich schon mit jeder Drehung der Ablenkeinheit zu erfassen. Für diesen allein durch die Verkippung erzielten Effekt ist eine Einwirkung eines Antriebs der Verschwenkeinrichtung nicht erforderlich. Es ist auch denkbar, das Drehscheibenelement und dessen Kopplung aufwändiger zu gestalten, wie dies vom Grundaufbau her von der Taumelscheibe eines Hubschraubers bekannt ist. Damit kann der Verkippwinkel des Drehscheibenelements auf einen gewünschten Winkel verstellt oder sogar im Betrieb zyklisch variiert werden.

Vorzugsweise ist ein Kipphebel als Verbindung zwischen dem Hubachselement und der Ablenkeinheit vorgesehen, der an seinem einen Ende exzentrisch an der Ablenkeinheit und an seinem anderen Ende an dem Hubachselement, insbesondere an dem Drehscheibenelement angebracht ist. Der Kipphebel setzt so die Translationsbewegung des Hubachselements in eine entsprechende Änderung des Schwenkwinkels der Ablenkeinheit um.

Der Kipphebel ist bevorzugt an der Ablenkeinheit und/oder an dem Hubachselement über ein Gelenk, insbesondere ein Blattfedergelenk oder ein Filmgelenk angebracht. Diese Gelenke sorgen dafür, dass der Kipphebel die unterschiedlichen Stellungen bei verschiedenen Schwenkwinkeln der Ablenkeinheit einnehmen kann.

Die Verschwenkeinrichtung weist bevorzugt einen Verschwenkantrieb mit einer Kurvenscheibe auf, um eine Rotationsbewegung des Verschwenkantriebs in die Translationsbewegung des Hubachselements zu überführen. Der Antrieb ist beispielsweise ein Schrittmotor.

Das Hubachselement ist bevorzugt in einer Parallelführung gelagert, die eine Ankopplungseinheit für die Ankopplung der Kurvenscheibe aufweist. Eine Drehbewegung der Kurvenscheibe verstellt damit die Position des Hubachselements längs der Drehachse, wobei aufgrund der Parallelführung keine Komponenten quer zur Drehachse entstehen.

Die Ankopplungseinheit weist vorzugsweise ein Andruckelement zur spielfreien Ankopplung der Parallelführung an die Kurvenscheibe sowie ein Gegenlagerelement zwischen dem Andruckelement und dem Verschwenkantrieb zur Entlastung des Verschwenkantriebs von dem Andruckelement auf. Damit kann das volle Drehmoment des Verschwenkantriebs für die Verschwenkbewegung genutzt werden. Die Ankopplung sorgt für extrem verschleißarme Übertragung und damit eine sehr hohe Anzahl von Verstellzyklen.

Die Ablenkeinheit weist bevorzugt einen mitdrehenden Sendetubus auf. Dadurch wird der Sendekanal abgeschirmt und ein Übersprechen auf den Empfangskanal verhindert oder zumindest unterdrückt. Besonders bevorzugt ist dem mitdrehenden Sendetubus ein stationärer Sendetubus für den Sendepfadanteil zwischen Lichtsender und Ablenkeinheit vorgeordnet. Der Sendetubus ist vorzugsweise fest mit der Ablenkeinheit verbunden und vollzieht somit sowohl die Drehbewegung als auch die Schwenkbewegung mit.

Der Sensor weist bevorzugt eine kugelförmige Frontscheibe auf, an welcher der Sendetubus bei Dreh- und Schwenkbewegungen der Ablenkeinheit anliegt. Eine herkömmlich eingesetzte kegelstumpfförmige Frontscheibe würde je nach Schwenkstellung einen größeren Abstand zu dem Sendetubus einnehmen, so dass Frontscheibenreflexe des Sendelichts in den Empfangskanal gelangen. Eine kugelförmige Frontscheibe dagegen schmiegt sich an die Bewegungsbahn des Sendetubus' an und verhindert somit das optische Übersprechen durch solche Frontscheibenreflexe.

Vorzugsweise ist ein Drehantrieb mit einer Hohlwelle für die Drehbewegung der Ablenkeinheit um die Drehachse vorgesehen, wobei das Hubachselement in der Hohlwelle angeordnet ist. Damit kann die Verschwenk- und Drehbewegung besonders kompakt realisiert werden.

Mit der Hohlwelle ist bevorzugt eine Halterung für die Ablenkeinheit verbunden, insbesondere mit zwei an entgegengesetzten Seiten der Ablenkeinheit angreifenden Haltearmen. Dadurch wird die Drehbewegung von dem Drehantrieb auf die Ablenkeinheit übertragen.

Die Ablenkeinheit, der Sendetubus, die Halterung, der Kipphebel, die Drehscheibe und/oder das Hubachselement sind bevorzugt aus Kunststoff hergestellt. Dadurch kann eine besonders geringe Masse der mitdrehenden beziehungsweise der beweglichen Teile erzielt werden. Auch weitere Bauteile werden vorzugsweise aus Kunststoff hergestellt, um ein leichtes Gerät zu erhalten.

Die Auswertungseinheit ist bevorzugt dafür ausgebildet, durch Einwirken auf die Verschwenkeinrichtung bevorzugte Winkelstellungen der Ablenkeinheit um die Schwenkachse öfter oder länger einzustellen als andere Winkelstellungen. Ein 3D-Laserscanner erfasst generell Bilder langsamer als eine 3D-Kamera. Die Reaktionszeit des Sensors wird beschleunigt, indem nicht ständig der gesamte mögliche Erfassungsbereich abgetastet wird, sondern die zeitkritischen oder aus sonstigen Gründen besonders wichtigen Winkelbereiche ("regions of interest") häufiger angemessen werden.

Die Auswertungseinheit ist außerdem bevorzugt dafür ausgebildet, anhand des Empfangssignals die Lichtlaufzeit zwischen Aussenden und Empfang des Lichtstrahls und somit die Entfernung erfasster Objekte zu bestimmen. Zudem werden vorzugsweise Winkelmesseinrichtungen eingesetzt, um die aktuelle Winkelstellung der Ablenkeinheit zu erfassen. Dabei kann der Schwenkwinkel über seine eindeutige Beziehung zu dem Hub des Hubachselements oder die Stellung der Kurvenscheibe erfasst werden. Mit Drehwinkel, Schwenkwinkel und Abstand stehen vollständige 3D-Koordinaten der erfassten Objekte zur Verfügung, die für eine Positionsbestimmung und/oder eine Konturerfassung verwendet werden können.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine dreidimensionale Ansicht der Abtasteinheit einer Ausführungsform der Erfindung;
- Fig. 2: einen Querschnitt der Abtasteinheit gemäß Figur 1;
- Fig. 3: einen weiterer Querschnitt der Abtasteinheit gemäß Figur 1 senkrecht zu dem Querschnitt der Figur 2;
- Fig. 4: einen Querschnitt der Abtasteinheit analog Figur 2 bei einer veränderten Schwenkwinkelstellung einer Ablenkeinheit;
- Fig. 5: einen Querschnitt der Abtasteinheit analog Figur 2 bei einer nochmals veränderten Schwenkwinkelstellung der Ablenkeinheit.
- Fig. 6: eine Ausschnittsvergrößerung des in Figur 2 mit einem Kreis bezeichneten Bereichs; und
- Fig. 7: einen Querschnitt der Ansicht aus Figur 6 gemäß der dort mit AA bezeichneten Linie.

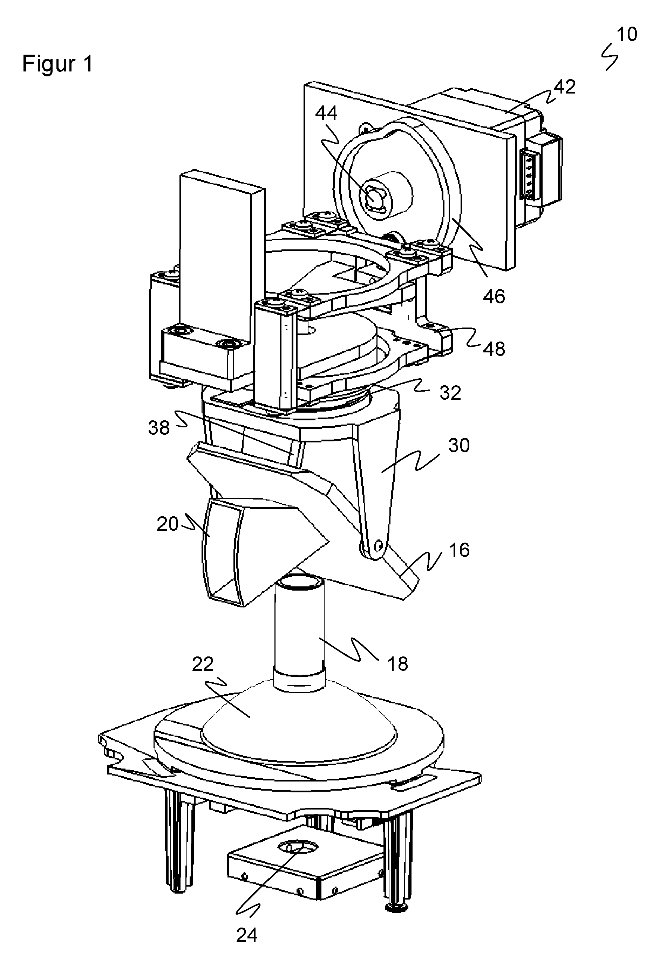

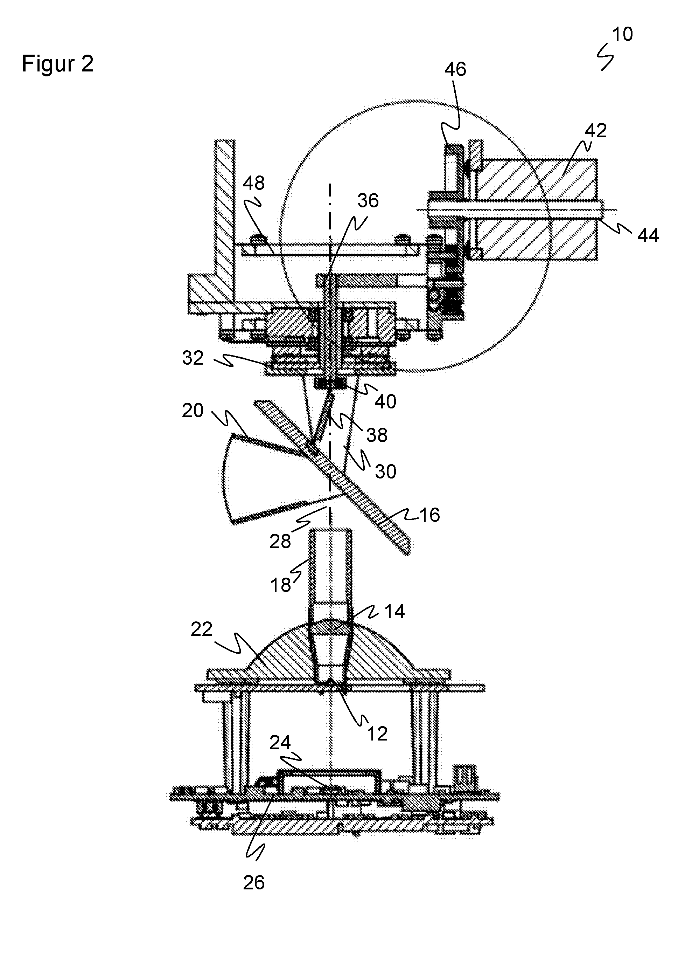

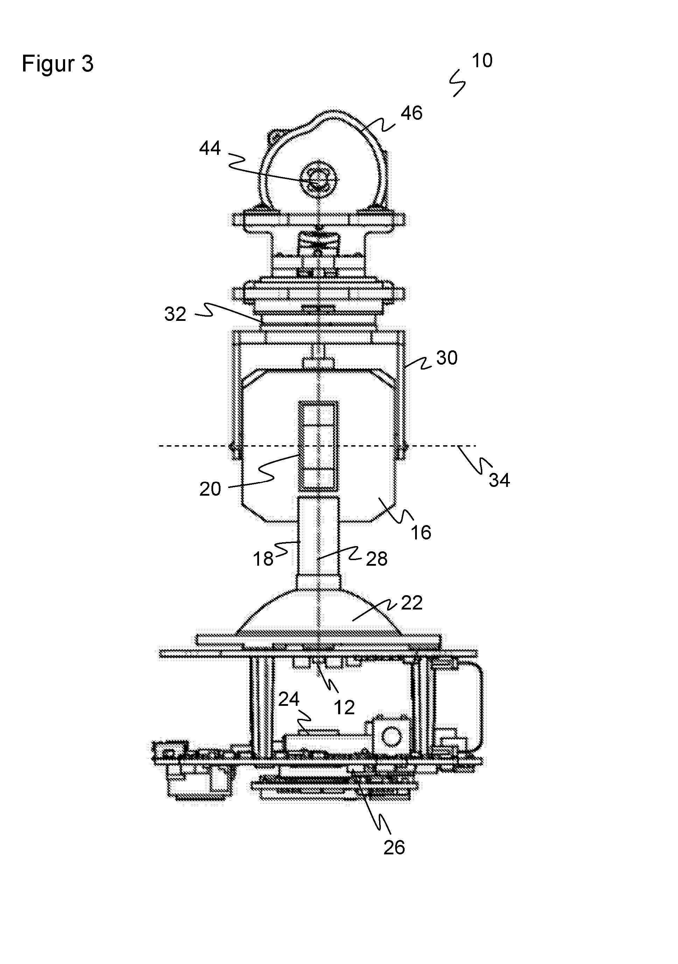

Figur 1 zeigt eine Abtasteinheit 10 eines Laserscanners als Ausführungsform eines erfindungsgemäßen Sensors in einer dreidimensionalen Ansicht. Um auch solche Elemente erkennen zu können, die von außen nicht sichtbar sind, stützt sich die nachfolgende Beschreibung zugleich auf einen ersten Querschnitt gemäß Figur 2 und einem zweiten Querschnitt aus der zu dem ersten Querschnitt senkrechten und aus der Mitte verschobenen Perspektive gemäß Figur 3, wobei in allen Figuren gleiche Bezugszeichen die gleichen Merkmale bezeichnen.

Ein von einem Lichtsender 12, beispielsweise einem Laser, erzeugter Lichtstrahl wird von einer Sendeoptik 14 gebündelt und anschließend von einer beweglichen Ablenkeinheit 16 in einen Überwachungsbereich abgelenkt. Innerhalb des Laserscanners wird der so entstehende Sendepfad zur Vermeidung von optischem Übersprechen auf einen Empfangspfad von einem zweiteiligen Sendetubus 18, 20 abgeschirmt. Ein stationärer Anteil 18 des Sendetubus' schließt direkt an dem Lichtsender 12 an und umgibt die Sendeoptik 14 sowie den Sendepfad bis zu der Ablenkeinheit 16. Ein mitdrehender Anteil 20 des Sendetubus' ist an der Ablenkeinheit 16 angeordnet und mit dieser mitbeweglich, um den mit der Stellung der Ablenkeinheit variablen Sendepfad zu umgeben. Der mitdrehende Anteil 20 weist eine Öffnung mit abgerundeter Außenkontur auf, die in Längsrichtung größer ist als in Querrichtung.

Trifft der ausgesandte Lichtstrahl in dem Überwachungsbereich auf ein Objekt, so werden Lichtanteile remittiert oder reflektiert und gelangen auf einem Empfangspfad wieder zu dem Laserscanner zurück. Diese Lichtanteile werden ebenfalls an der Ablenkeinheit 16 umgelenkt und danach von einer Empfangsoptik 22 auf einen Lichtempfänger 24 gebündelt, beispielsweise eine Photodiode.

Der Lichtempfänger 24 erzeugt aus dem einfallenden Licht ein Empfangssignal, das anschließend elektronisch ausgewertet wird. Die dafür zuständige Auswertungseinheit 26 ist in den Figuren in Form diverser Leiterplattenstrukturen gezeigt, die zusätzliche Anschlüsse für Stromversorgung, Datenaustausch, Ansteuerungen und dergleichen aufweisen, deren Details aber für das Verständnis der Erfindung nicht wesentlich sind.

In der Auswertungseinheit 26 wird die Lichtlaufzeit vom Aussenden des Lichtstrahls bis zu dem Empfang von Lichtanteilen bestimmt, die an einem Objekt in dem Überwachungsbereich remittiert werden. Aus der Lichtlaufzeit wird unter Verwendung der Lichtgeschwindigkeit auf die Entfernung des Objektes von dem Laserscanner geschlossen.

Die Ablenkeinheit 16 ist vorzugsweise als Drehspiegel ausgestaltet, der kontinuierlich um eine Drehachse 28 rotiert. Dazu ist die Ablenkeinheit 16 über eine Halterung 30 mit einer Hohlwelle 32 eines nicht dargestellten Antriebs verbunden. In der Regel ist die Drehachse 28 zugleich die optische Achse von Lichtsender 12 und Lichtempfänger 24. Die jeweilige Winkelstellung der Ablenkeinheit 16 bezüglich der Drehachse 28 wird über einen ebenfalls nicht dargestellten Encoder erfasst. Der von dem Lichtsender 12 erzeugte Lichtstrahl überstreicht aufgrund dieser Rotationsbewegung eine Abtastebene.

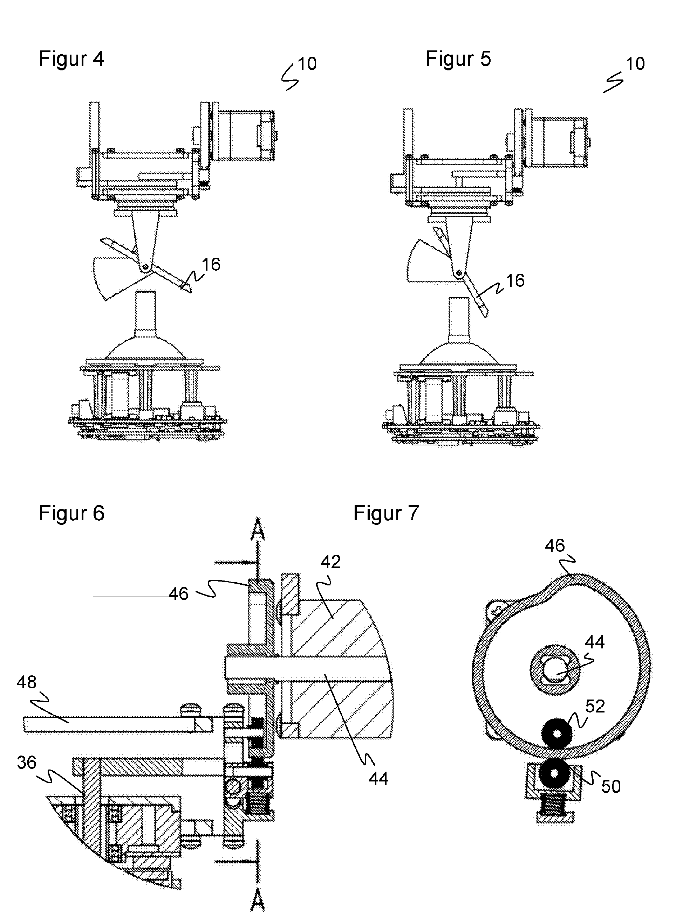

Zusätzlich zu der Rotation um die Drehachse 28 wird die Ablenkeinheit 16 um eine senkrecht zu der Drehachse 28 stehende Schwenkachse 34 verschwenkt. Zur Illustration der Schwenkbewegung zeigen die Figuren 4 und 5 zwei weitere Querschnitte der Abtasteinheit 10 analog der Figur 2, wobei die Ablenkeinheit einen Verschwenkwinkel von -15° und +15° einnimmt.

Die Schwenkachse 34 wird beispielsweise durch Angriffspunkte zweier Haltearme der Halterung 30 an der Ablenkeinheit 16 festgelegt. Dadurch wird die aufgrund der Drehbewegung um die Drehachse 28 entstehende Abtastebene verkippt. Je nach Verhältnis der Drehgeschwindigkeit zu der Verschwenkgeschwindigkeit wird somit auf unterschiedlichen Bahnen des abtastenden Lichtstrahls ein dreidimensionaler Raumbereich überwacht. Die Abtastung kann beispielsweise quasi spiralförmig sein, wenn die Verschwenkgeschwindigkeit relativ langsam gegenüber der Drehgeschwindigkeit ist, wobei das Geschwindigkeitsverhältnis die Dichte der Spirallinien bestimmt.

Das Verschwenken der Ablenkeinheit 16 erfolgt mit Hilfe einer sich längs der Drehachse 28 auf- und abbewegenden Verschwenkeinheit. Die Translationsbewegung eines nicht rotierenden Hubachselements 36 im Inneren der Hohlwelle 32 wird durch einen dezentral an der Ablenkeinheit 16 angebrachten Kipphebel 38 in die Verschwenkbewegung übersetzt. Als Zwischenstück zwischen dem mitdrehenden Kipphebel 38 und dem abgesehen von der Translationsbewegung feststehenden Hubachselement 36 dient ein Drehscheibenelement 40 mit einer Kugellagerung an dem der Ablenkeinheit 16 zugewandten Ende des Hubachselements 36. Der Kipphebel 38 ist an seinen beiden Enden über ein Gelenk angeschlossen, beispielsweise ein Blattfedergelenk oder ein Filmgelenk, um spielfrei die unterschiedlichen Stellungen für die verschiedenen Verschwenkwinkel einnehmen zu können. Der Kipphebel 38 ist so gestaltet und angebracht, dass nur geringe Ausschläge an den Verbindungsstellen entstehen, um einen Ermüdungsbruch zu vermeiden.

Auch der Verschwenkwinkel der Ablenkeinheit wird durch einen nicht dargestellten Winkelencoder erfasst. Alternativ wird direkt oder indirekt die Position des Hubsachselements ermittelt, die in fester Beziehung zu dem Verschwenkwinkel steht.

Werden somit remittierte Lichtanteile des ausgesandten Lichtstrahls in dem Lichtempfänger 24 registriert, so steht der Drehwinkel und der Schwenkwinkel sowie über das Lichtlaufzeitverfahren auch der Abstand des erfassten Objekts in der Auswertungseinheit 26 zur Verfügung. Damit ist die Objektposition beziehungsweise die Objektkontur in dreidimensionalen Kugelkoordinaten erfasst.

Der bewegliche Anteil 20 des Sendetubus' sollte direkt an einer in den Figuren nicht dargestellten Frontscheibe des Laserscanners anliegen, um zu vermeiden, dass Frontscheibenreflexe in den Empfangspfad des Lichtempfängers 24 gelangen. Damit das in allen Verschwenkstellungen der Ablenkeinheit 16 gewährleistet ist, wird die Frontscheibe kugelförmig ausgestaltet. Die gerundete Außenkontur des beweglichen Anteils 20 des Sendetubus' bleibt dann stets in gutem Kontakt mit der Innenfläche der kugelförmigen Frontscheibe.

Die Translationsbewegung des Hubachselements 36 wird von einem Verschwenkantrieb 42 erzeugt, beispielsweise einem Schrittmotor. Zur näheren Erläuterung zeigt Figur 6 den in Figur 2 durch einen Kreis bezeichneten Ausschnitt in einer Vergrößerung. Figur 7 zeigt einen Schnitt durch die Darstellung gemäß Figur 6 entlang der Linie AA.

Eine Welle 44 des Verschwenkantriebs 42 versetzt eine Kurvenscheibe 46 in Drehbewegung. Das Hubachselement 36 ist in einer Parallelführung 48 gelagert, die an die Kurvenscheibe 46 angekoppelt ist. Eine Drehbewegung der Welle 44 überträgt sich somit über die Kurvenscheibe 46 aufgrund der Parallelführung 48 in die Translationsbewegung des Hubachselements 36.

Die Ankopplung der Kurvenscheibe 46 an die Parallelführung 48 erfolgt über ein gefedertes Andruckelement 50 und ein Gegenlagerelement 52, das dem Andruckelement 50 bezüglich der Steigung der Kurvenscheibe 46 senkrecht gegenüber angeordnet ist. Sowohl das Andruckelement 50 als auch das Gegenlagerelement 52 umfassen ein Kugellager. In der so ausgebildeten doppelten Kugellagerführung läuft die Kurvenscheibe 46. Über das Andruckelement 50 wird dessen Kugellager an die Kurvenscheibe 46 angefedert und gewährleistet so die Spielfreiheit der Ankopplung. Das Gegenlagerelement 52 nimmt die von dem Andruckelement 50 erzeugte Kraft auf und leitet sie somit von der Welle 44 ab. Hierdurch wird eine auf den Verschwenkantrieb 42 momentenfreie, spielfreie Ankopplung zu der Parallelführung 48 erreicht.

Durch Variation des Dreh- und Verstellwinkels können somit verschiedene Punkte in einem dreidimensionalen Raum erfasst werden. Gewöhnlich wird eine kontinuierliche Drehbewegung um die Drehachse 28 mit einer periodischen Änderung des Verschwenkwinkels über den möglichen Kippbereich der Ablenkeinheit 16 überlagert und somit der Raumbereich regelmäßig abgetastet. Es ist aber auch denkbar, den Verschwenkwinkel gezielt nur über einen kleineren Bereich zu variieren oder sogar ganz auf einen gewünschten Wert einzustellen, um gezielt einen bestimmten Raumbereich oder eine bestimmte Abtastebene mit höherer Rate abzutasten. Derartige besonders interessante Raumbereiche (region of interest) können sich beispielsweise bei der automatischen Navigation von Fahrzeugen ergeben. Hier kann aufgrund unterschiedlicher Beladung und Unebenheiten nicht immer davon ausgegangen werden, dass die zentrale Abtastebene bei einem mittleren Verschwenkwinkel parallel zum Fahrweg liegt. Derartige Verkippungen des Fahrzeugs können dann durch Einstellen des passenden Verschwenkwinkelbereichs ausgeglichen werden. Allgemein kann durch gezieltes Abweichen von einer regelmäßigen Verschwenkbewegung über den gesamten verfügbaren Winkelbereich eine Auswahl interessierender Regionen vorgenommen werden, die dann mit höhere Abtastrate erfasst werden.

## Patentansprüche

1. Optoelektronischer Sensor, insbesondere Laserscanner, der einen Lichtsender (12) zum Aussenden eines Lichtstrahls, eine um eine Drehachse (28) drehbare Ablenkeinheit (16) zur periodischen Ablenkung des Lichtstrahls, eine Verschwenkeinrichtung zum Verschwenken der Ablenkeinheit (16) um eine Schwenkachse (34) quer zu der Drehachse (28), einen Lichtempfänger (24) zum Erzeugen eines Empfangssignals aus dem in dem Überwachungsbereich remittierten oder reflektierten Lichtstrahl sowie eine Auswertungseinheit (26) aufweist, welche für die Erfassung von Objekten in dem Überwachungsbereich anhand des Empfangssignals ausgebildet ist,
**dadurch gekennzeichnet,**
**dass** die Verschwenkeinrichtung ein Hubachselement (36) aufweist, das mit der Ablenkeinheit (16) verbunden ist und dessen Translationsbewegung längs der Drehachse (28) die Schwenkbewegung der Ablenkeinheit (16) bewirkt.

2. Sensor nach Anspruch 1,
wobei das Hubachselement (36) parallel zu der Drehachse (28) angeordnet ist, insbesondere auf der Drehachse (28), und die Drehbewegung der Ablenkeinheit (16) nicht mitvollzieht.

3. Sensor nach einem der vorhergehenden Ansprüche,
wobei das Hubachselement (36) an einem in Richtung zu der Ablenkeinheit (16) befindlichen Ende ein Drehscheibenelement (40) aufweist, welches mit der Ablenkeinheit (16) mitrotiert und insbesondere über ein Kugellager mit dem Hubachselement (36) verbunden ist.

4. Sensor nach einem der vorhergehenden Ansprüche,
wobei das Drehscheibenelement (40) gegenüber der Senkrechten zur Drehachse (28) um einen Winkel verkippt ist.

5. Sensor nach einem der vorhergehenden Ansprüche,
wobei ein Kipphebel (38) als Verbindung zwischen dem Hubachselement (36) und der Ablenkeinheit (16) vorgesehen ist, der an seinem einen Ende exzentrisch an der Ablenkeinheit (16) und an seinem anderen Ende an dem Hubachselement (36), insbesondere an dem Drehscheibenelement (40) angebracht ist.

6. Sensor nach Anspruch 5,
wobei der Kipphebel (38) an der Ablenkeinheit (16) und/oder an dem Hubachselement (36) über ein Gelenk, insbesondere ein Blattfedergelenk oder ein Filmgelenk angebracht ist.

7. Sensor nach einem der vorhergehenden Ansprüche,
wobei die Verschwenkeinrichtung einen Verschwenkantrieb (42) mit einer Kurvenscheibe (46) aufweist, um eine Rotationsbewegung des Verschwenkantriebs (42) in die Translationsbewegung des Hubachselements (36) zu überführen.

8. Sensor nach Anspruch 7,
wobei das Hubachselement (36) in einer Parallelführung (48) gelagert ist, die eine Ankopplungseinheit (50, 52) für die Ankopplung der Kurvenscheibe (46) aufweist.

9. Sensor nach Anspruch 8,
wobei die Ankopplungseinheit (50, 52) ein Andruckelement (50) zur spielfreien Ankopplung der Parallelführung (48) an die Kurvenscheibe (46) sowie ein Gegenlagerelement (52) zwischen dem Andruckelement (50) und dem Verschwenkantrieb (42) zur Entlastung des Verschwenkantriebs (42) von dem Andruckelement (50) aufweist.

10. Sensor nach einem der vorhergehenden Ansprüche,
wobei die Ablenkeinheit (16) einen mitdrehenden Sendetubus (18, 20) aufweist, wobei insbesondere der Sensor eine kugelförmige Frontscheibe aufweist, an welcher der Sendetubus (18, 20) bei Dreh- und Schwenkbewegungen der Ablenkeinheit (16) anliegt.

11. Sensor nach einem der vorhergehenden Ansprüche,
wobei ein Drehantrieb mit einer Hohlwelle (32) für die Drehbewegung der Ablenkeinheit (16) um die Drehachse (28) vorgesehen ist, und wobei das Hubachselement (36) in der Hohlwelle (32) angeordnet ist.

12. Sensor nach Anspruch 11,
wobei mit der Hohlwelle (32) eine Halterung (30) für die Ablenkeinheit (16) verbunden ist, insbesondere mit zwei an entgegengesetzten Seiten der Ablenkeinheit (16) angreifenden Haltearmen.

13. Sensor nach einem der vorhergehenden Ansprüche,
wobei die Ablenkeinheit (16), der Sendetubus (18, 20), die Halterung (30), der Kipphebel (38), die Drehscheibe (40) und/oder das Hubachselement (36) aus Kunststoff hergestellt sind.

14. Sensor nach einem der vorhergehenden Ansprüche,
wobei die Auswertungseinheit (26) dafür ausgebildet ist, durch Einwirken auf die Verschwenkeinrichtung bevorzugte Winkelstellungen der Ablenkeinheit (16) um die Schwenkachse öfter oder länger einzustellen als andere Winkelstellungen.

15. Verfahren zur Erfassung und Abstandsbestimmung von Objekten in einem Überwachungsbereich, wobei ein Lichtstrahl in den Überwachungsbereich ausgesandt wird, remittierte oder reflektierte Lichtanteile des Lichtstrahls erfasst und in ein Empfangssignal umgewandelt werden und aus der Lichtlaufzeit zwischen Aussenden des Lichtstrahls und Empfang von Lichtanteilen ein Objektabstand bestimmt wird, wobei der Lichtstrahl periodisch einen dreidimensionalen Raumbereich als Überwachungsbereich abtastet, indem der Lichtstrahl über eine Ablenkeinheit (16) geführt wird, die um eine Drehachse (28) gedreht und um eine Schwenkachse (34) quer zu der Drehachse (28) verschwenkt wird, **dadurch gekennzeichnet,**
**dass** die Ablenkeinheit (16) von einer Verschwenkeinrichtung mit einem Hubachselement (36) verschwenkt wird, das zum Verschwenken eine Translationsbewegung längs der Drehachse (28) ausführt.

## Geänderte Patentansprüche

### Geänderte Patentansprüche gemäss Regel 137(2) EPÜ.

**1.** Optoelektronischer Sensor, insbesondere Laserscanner, der einen Lichtsender (12) zum Aussenden eines Lichtstrahls, eine um eine Drehachse (28) drehbare Ablenkeinheit (16) zur periodischen Ablenkung des Lichtstrahls, eine Verschwenkeinrichtung zum Verschwenken der Ablenkeinheit (16) um eine Schwenkachse (34) quer zu der Drehachse (28), einen Lichtempfänger (24) zum Erzeugen eines Empfangssignals aus dem in dem Überwachungsbereich remittierten oder reflektierten Lichtstrahl sowie eine Auswertungseinheit (26) aufweist, welche für die Erfassung von Objekten in dem Überwachungsbereich anhand des Empfangssignals ausgebildet ist, wobei die Verschwenkeinrichtung ein Hubachselement (36) aufweist, das mit der Ablenkeinheit (16) verbunden ist und dessen Translationsbewegung längs der Drehachse (28) die Schwenkbewegung der Ablenkeinheit (16) bewirkt, wobei das Hubachselement (36) die Drehbewegung der Ablenkeinheit (16) nicht mitvollzieht,
**dadurch gekennzeichnet,**
**dass** das Hubachselement (36) auf der Drehachse (28) angeordnet ist.

**2.** Sensor nach Anspruch 1,
wobei das Hubachselement (36) an einem in Richtung zu der Ablenkeinheit (16) befindlichen Ende ein Drehscheibenelement (40) aufweist, welches mit der Ablenkeinheit (16) mitrotiert und insbesondere über ein Kugellager mit dem Hubachselement (36) verbunden ist.

**3.** Sensor nach Anspruch 2,
wobei das Drehscheibenelement (40) gegenüber der Senkrechten zur Drehachse (28) um einen Winkel verkippt ist.

**4.** Sensor nach einem der vorhergehenden Ansprüche,
wobei ein Kipphebel (38) als Verbindung zwischen dem Hubachselement (36) und der Ablenkeinheit (16) vorgesehen ist, der an seinem einen Ende exzentrisch an der Ablenkeinheit (16) und an seinem anderen Ende an dem Hubachselement (36), insbesondere an dem Drehscheibenelement (40) angebracht ist.

**5.** Sensor nach Anspruch 4,
wobei der Kipphebel (38) an der Ablenkeinheit (16) und/oder an dem Hubachselement (36) über ein Gelenk, insbesondere ein Blattfedergelenk oder ein Filmgelenk angebracht ist.

**6.** Sensor nach einem der vorhergehenden Ansprüche,
wobei die Verschwenkeinrichtung einen Verschwenkantrieb (42) mit einer Kurvenscheibe (46) aufweist, um eine Rotationsbewegung des Verschwenkantriebs (42) in die Translationsbewegung des Hubachselements (36) zu überführen.

**7.** Sensor nach Anspruch 6,
wobei das Hubachselement (36) in einer Parallelführung (48) gelagert ist, die eine Ankopplungseinheit (50, 52) für die Ankopplung der Kurvenscheibe (46) aufweist.

**8.** Sensor nach Anspruch 7,
wobei die Ankopplungseinheit (50, 52) ein Andruckelement (50) zur spielfreien Ankopplung der Parallelführung (48) an die Kurvenscheibe (46) sowie ein Gegenlagerelement (52) zwischen dem Andruckelement (50) und dem Verschwenkantrieb (42) zur Entlastung des Verschwenkantriebs (42) von dem Andruckelement (50) aufweist.

**9.** Sensor nach einem der vorhergehenden Ansprüche,
wobei die Ablenkeinheit (16) einen mitdrehenden Sendetubus (18, 20) aufweist, wobei insbesondere der Sensor eine kugelförmige Frontscheibe aufweist, an welcher der Sendetubus (18, 20) bei Dreh- und Schwenkbewegungen der Ablenkeinheit (16) anliegt.

**10.** Sensor nach einem der vorhergehenden Ansprüche,
wobei ein Drehantrieb mit einer Hohlwelle (32) für die Drehbewegung der Ablenkeinheit (16) um die Drehachse (28) vorgesehen ist, und wobei das Hubachselement (36) in der Hohlwelle (32) angeordnet ist.

**11.** Sensor nach Anspruch 10,
wobei mit der Hohlwelle (32) eine Halterung (30) für die Ablenkeinheit (16) verbunden ist, insbesondere mit zwei an entgegengesetzten Seiten der Ablenkeinheit (16) angreifenden Haltearmen.

**12.** Sensor nach einem der vorhergehenden Ansprüche,
wobei die Ablenkeinheit (16), der Sendetubus (18, 20), die Halterung (30), der Kipphebel (38), die Drehscheibe (40) und/oder das Hubachselement (36) aus Kunststoff hergestellt sind.

**13.** Sensor nach einem der vorhergehenden Ansprüche,
wobei die Auswertungseinheit (26) dafür ausgebildet ist, durch Einwirken auf die Verschwenkeinrichtung bevorzugte Winkelstellungen der Ablenkeinheit (16) um die Schwenkachse öfter oder länger einzustellen als andere Winkelstellungen.

**14.** Verfahren zur Erfassung und Abstandsbestimmung von Objekten in einem Überwachungsbereich, wobei ein Lichtstrahl in den Überwachungsbereich ausgesandt wird, remittierte oder reflektierte Lichtanteile des Lichtstrahls erfasst und in ein Empfangssignal umgewandelt werden und aus der Lichtlaufzeit zwischen Aussenden des Lichtstrahls und Empfang von Lichtanteilen ein Objektabstand bestimmt wird, wobei der Lichtstrahl periodisch einen dreidimensionalen Raumbereich als Überwachungsbereich abtastet, indem der Lichtstrahl über eine Ablenkeinheit (16) geführt wird, die um eine Drehachse (28) gedreht und um eine Schwenkachse (34) quer zu der Drehachse (28) verschwenkt wird, wobei die Ablenkeinheit (16) von einer Verschwenkeinrichtung mit einem Hubachselement (36) verschwenkt wird, das zum Verschwenken eine Translationsbewegung längs der Drehachse (28) ausführt und die Drehbewegung der Ablenkeinheit (16) nicht mitvollzieht,
**dadurch gekennzeichnet,**
**dass** das Hubachselement (36) auf der Drehachse (28) angeordnet ist.
